# EUROPEAN PATENT SPECIFICATION

(11) **EP 3 206 340 B1**
(45) Date of publication and mention of the grant of the patent: **31.03.2021**
(21) Application number: 16155661.8
(22) Date of filing: 15.02.2016
(51) Int. Cl.: H04L 12/433, H04L 29/08, H04L 12/417, H04L 12/24, H04L 12/26

(54) **METHOD AND NETWORK FOR TRANSMITTING DATA OVER A NETWORK**
VERFAHREN UND NETZWERK ZUM SENDEN VON DATEN ÜBER EIN NETZWERK
PROCÉDÉ ET RÉSEAU DE TRANSMISSION DE DONNÉES SUR UN RÉSEAU

(43) Date of publication of application: 16.08.2017
(73) Proprietor: Rohde & Schwarz GmbH & Co. KG, 81671 München (DE)
(72) Inventor: Hoffmann, Felix, 81375 München (DE); Pfeifer, Hagen, 80687 München (DE)
(74) Representative: Körfer, Thomas

(56) References cited:
- CN-A- 1 649 319
- PAOLO TENTI ET AL: "Distribution Loss Minimization by Token Ring Control of Power Electronic Interfaces in Residential Microgrids", IEEE TRANSACTIONS ON INDUSTRIAL ELECTRONICS, IEEE SERVICE CENTER, PISCATAWAY, NJ, USA, vol. 59, no. 10, 31 October 2012 (2012-10-31), pages 3817-3826, XP011442477, ISSN: 0278-0046, DOI: 10.1109/TIE.2011.2161653
- ONUR SAVAS ET AL: "Randomized Sequential Algorithms for Data Aggregation in Sensor Networks", INFORMATION SCIENCES AND SYSTEMS, 2006 40TH ANNUAL CONFERENCE ON, IEEE, PI, 31 March 2006 (2006-03-31), pages 165-170, XP031011816, ISBN: 978-1-4244-0349-3
- MALPANI N ET AL: "Distributed token circulation on mobile ad hoc networks", NETWORK PROTOCOLS NINTH INTERNATIONAL CONFERENCE ON ICNP 2001 NOV. 11-14, 2001, PISCATAWAY, NJ, USA,IEEE, 11 November 2001 (2001-11-11), pages 4-13, XP010585437, ISBN: 978-0-7695-1429-1
- JUN LUO ET AL: "NASCENT: network layer service for vicinity ad-hoc groups", SENSOR AND AD HOC COMMUNICATIONS AND NETWORKS, 2004. IEEE SECON 2004. 2004 FIRST ANNUAL IEEE COMMUNICATIONS SOCIETY CONFERENCE ON SANTA CLARA, CA, USA 4-7 OCT. 2004, PISCATAWAY, NJ, USA,IEEE, 4 October 2004 (2004-10-04), pages 439-448, XP010759621, DOI: 10.1109/SAHCN.2004.1381946 ISBN: 978-0-7803-8796-6

## Description

The invention relates to a network, especially to a wireless ad-hoc network, more especially a MANET network, and a method for forwarding at least one token through the network of nodes within a neighborhood.

Generally, in many applications of wireless ad-hoc networks, some nodes need to take over special roles and perform tasks that do not need to be performed by all nodes. Therefore, these tasks are also called distributed tasks. For instance, in wireless sensor networks, all nodes typically perform some kind of measurement of the environment. However, only a subset of the nodes might then be required to collect the measurement results from their neighboring nodes in order to perform some kind of processing of the raw measurement data. Such a subset of nodes which perform some kind of additional tasks, whether it is processing of sensor data, or something completely different, are referred to here as active nodes.

Typically, it is not necessary for all nodes to perform these special tasks and in many cases, it may even be undesired, since the additional processing and communication load that would be placed on these active nodes would result in a faster depletion of battery power. At the same time, the active nodes should be well distributed in the network. Ideally, each node should be close to an active node but at the same time, local accumulations of too many active nodes in a single area of the network should be avoided.

Nevertheless, conventional networks and methods for token forwarding employ just a single token and are not intended to be used for forwarding multiple tokens. In addition to this, with the aid of traditional token based networks and methods such as Token Ring according to the IEEE 802.5 specification, the single token is passed between the nodes of the network in a predefined order. Thus, such conventional networks and methods cannot provide solutions to the above-mentioned challenges.

For instance, a token ring control of power electronic interfaces in residential microgrids is disclosed by Paolo Tenti et al: "Distribution Loss Minimization by Token Ring Control of Power Electronic Interfaces in Residential Microgrids", IEEE TRANSACTIONS ON INDUSTRIAL ELECTRONICS, IEEE SERVICE CENTER, PISCATAWAY, NJ, USA, vol. 59, no. 10, 1 October 2012 (2012-10-01), pages 3817-3826. In this context, said token ring control approach aims at full exploitation of the microgrid capabilities with marginal investment in the information and communication technology infrastructure.

Furthermore, for example, randomized sequential algorithms for data aggregation in sensor networks are described by Onur Savas et al: "Randomized Sequential Algorithms for Data Aggregation in Sensor Networks", INFORMATION SCIENCES AND SYSTEMS, 2006 40TH ANNUAL CONFERENCE ON, IEEE, PI, 1 March 2006 (2006-03-01), pages 165-170. In this context, two different algorithms called SIMPLE-WALK and COALESCENT, which are generally based on random walks, are considered and finally compared with the (also randomized) GOSSIP-AVE algorithm.

Moreover, document CN 1649319 A discloses a method for forwarding multiple tokens between the nodes of a wireless ad-hoc network. However, the forwarding of the tokens according to CN 1649319 A is based on queues. As a consequence of this queue based method, the same neighboring nodes of the network get a token in the same order.

The above-described approach though is disadvantageous, since always the same neighboring nodes of the wireless ad-hoc network get a token, which leads to an additional processing and communication load solely placed on these nodes. As already mentioned above, in wireless sensor networks for example, this results in a faster depletion of battery power of the active nodes.

Accordingly, there is a need to provide a network and method, which allows for forwarding multiple tokens between the nodes of the network, wherein not just the same nodes of the network always get the tokens but each token is spread over the whole network, which ensures that active nodes are well distributed in the network. In addition to this, local accumulations of too many active nodes in a single area of the network are advantageously avoided.

This is solved by the features of claim 1 for a wireless ad-hoc network and claim 8 for the method. Further, it is solved by the features of claim 15 for the associated computer program. The dependent claims contain preferred embodiments.

According to a first aspect of the invention, a wireless ad-hoc network is provided. The network comprises nodes within a neighborhood, wherein each node has control means, and at least one token, wherein each token is periodically forwarded between the nodes of the network. The control means are configured in manner that at each token interval, the at least one token is forwarded from first nodes holding the at least one token within a present token interval to neighboring second nodes, each of which is not a neighboring node of neighboring third nodes having held the at least one token within a previous token interval directly preceding the present token interval. In this context, while the respective node is holding the at least one token, this node is selected to perform distributed tasks.

According to a first preferred implementation form of the first aspect, the control means are configured in a manner that the nodes of the network are synchronized in time.

According to a further preferred implementation form of the first aspect, the control means are configured in manner that the at least one token is forwarded to a neighboring node having not had a token for the longest time.

According to a further preferred implementation of the first aspect, the control means are configured in a manner that the at least one token is forwarded to a neighboring node having the lowest address, especially the lowest MAC (Media-Access-Control) address.

According to a further preferred implementation form of the first aspect, the control means are configured in a manner that a new token is created by a node of the network, if the neighboring nodes of the node are not currently holding a token and/or a predefined time has expired.

According to a further preferred implementation form of the first aspect, the control means are configured in manner that at least one existing token is deleted by merging at least two token into a single token, if a node of the network receives the at least two token from at least two different neighboring nodes.

According to a further preferred implementation form of the first aspect, the control means are configured in a manner that at least one existing token is deleted by discarding the at least one existing token, if there are no second nodes for receiving the at least one existing token available.

According to a second aspect of the invention, a method is provided. The method comprises forwarding at least one token through a network of nodes within a neighborhood, wherein the at least one token is forwarded periodically at a token interval. Moreover, at each token interval, the at least one token is forwarded from first nodes holding the at least one token within a present token interval to neighboring second nodes, each of which is not a neighboring node of neighboring third nodes having held the at least one token within a previous token interval directly preceding the present token interval. In this context, while the respective node is holding the at least one token, this node is selected to perform distributed tasks.

According to a first preferred implementation form of the second aspect, the nodes of the network are synchronized in time.

According to a further preferred implementation of the second aspect, the at least one token is forwarded to a neighboring node having not had a token for the longest time.

According to a further preferred implementation of the second aspect, the at least one token is forwarded to neighboring node having the lowest address, especially the MAC address.

According to a further preferred implementation of the second aspect, a new token is created by a node of the network, if the neighboring nodes of the node are not currently holding a token and/or a predefined time has expired.

According to a further preferred implementation of the second aspect, at least one existing token is deleted by merging at least two token into a single token, if a node of the network receives the at least two token from at least two different neighboring nodes.

According to a further preferred implementation of the second aspect, at least one existing token is deleted by discarding the at least one existing token, if there are no second nodes for receiving the at least one exiting token available.

According to a third preferred aspect of the invention, a computer program with program code means for performing all steps according to the second aspect, if the program is executed on a computer or digital signal processor, is provided.

Exemplary embodiments of the invention are now further explained with respect to the drawings by way of example only, and not for limitation. In the drawings:
- Fig. 1: shows an exemplary network comprising neighboring nodes, wherein a single token is forwarded;
- Fig. 2: shows an exemplar network comprising neighboring nodes, wherein multiple tokens are forwarded;
- Fig. 3: shows an exemplary interaction between a node of the network and a token;
- Fig. 4: shows an exemplary network comprising neighboring nodes, wherein a token is deleted by merging two tokens into a single token;
- Fig. 5: shows an exemplary network comprising neighboring nodes, wherein a token is deleted by discarding it; and
- Fig. 6: shows a flow chart of an embodiment of the second aspect of the invention.

In advance, before exemplary embodiments of the invention are explained with respect to the drawings by way of example, one aspect of the subject matter of the invention, in the following also referred to as Directed Geographic Token Algorithm, is summarized.

The invention allows the responsibility for the above-mentioned distributed tasks to circulate from node to node with little additional overhead. A node is selected to perform the distributed tasks while it is holding the token. After a predefined time, it passes the token on to a neighboring node. Since no clusters are formed explicitly, the Directed Geographic Token Algorithm is very robust to changes in the network topology.

With the aid of the Directed Geographic Token Algorithm, tokens are forwarded through the network in a directed manner: the next token holding node is chosen such that the token is forwarded away from the previous holder of the token. This ensures that a token does not linger in the same region of the network.

Furthermore, in case that two tokens are held by neighboring nodes, the next holders of the tokens are selected such that the tokens repel each other. Thus, local accumulations of tokens in the network are avoided.

In addition to this, tokens are created and deleted dynamically in order to adapt to the network size and density.

Firstly, a wireless network is assumed, in which a few or all nodes periodically broadcast Hello messages to a few or all of their neighbors. These Hello messages contain a list of the MAC (Media-Access-Control) addresses of all of the node's neighbors. Thus, each node is aware of all nodes in its two-hop neighborhood.

It is further assumed that all nodes are synchronized to a common time. Nodes that have received a token from a neighboring node hold on to the token for TOKEN_HOLD_TIME seconds and then pass the token on to a neighbor. The time instants when tokens are passed on occur periodically every TOKEN_HOLD_TIME seconds and are known by all nodes. The n-th time interval of duration TOKEN_HOLD_TIME is referred to as token interval, or respectively as *token_interval.*

For the Directed Geographic Token Algorithm, two additional fields are defined in each Hello message:
- TOKEN_HOLDER: a flag that indicates, if the sender of the message is currently holding a token (TOKEN_HOLDER = TRUE) or is currently not holding a token (TOKEN_HOLDER = FALSE),
- NEXT_TOKEN_HOLDER: the MAC address of the node which the sender of the Hello message has selected as the next holder of the token.

That is, for a Hello message that is transmitted in *token_interval (n),* NEXT_TOKEN_HOLDER indicates the node that will take over the token at the start of *token interval (n+1)*. At the end of *token_interval (n),* the current holder of the token again sets the TOKEN_HOLDER flag to FALSE, and the node indicated as NEXT_TOKEN_HOLDER automatically sets its TOKEN_HOLDER flag to TRUE and itself selects a new token holder for *token_interval (n+2)*, which it will announce in the NEXT_TOKEN_HOLDER field.

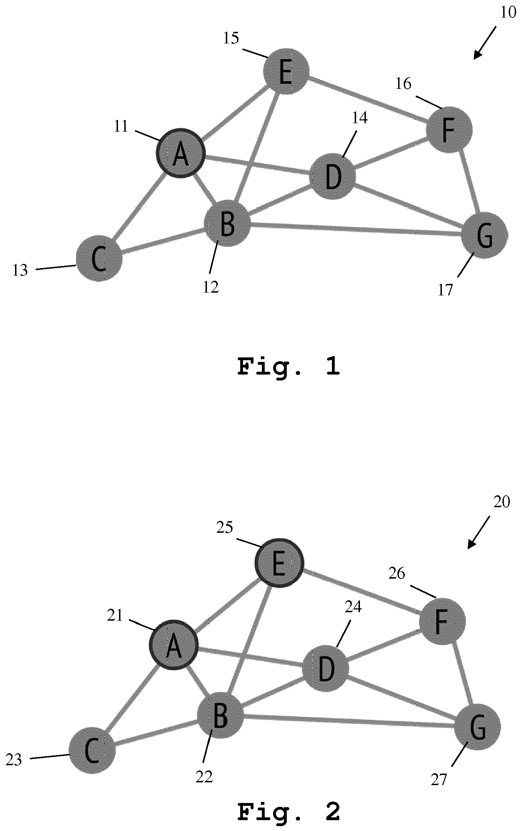

With the aid of Fig. 1, it is now described how a single existing token is forwarded through a network. Fig. 1 depicts a network 10 comprising nodes 11-17 within a neighborhood.

Every time a node 11- 17 of the network 10 receives a Hello message from a neighbor, it checks the TOKEN_HOLDER flag and remembers the current token interval as the last time that this neighbor held a token. When a node 11- 17 must select a neighbor to whom it shall pass a token, it selects the neighboring node which has not had a token (one of the tokens) for the longest time.

In case that this neighbor is not unique, the node 11-17 will prefer to pass the token to a neighbor which is not a neighbor of the token holder in the directly previous token interval. This introduces a directed aspect into the forwarding algorithm. If this still does not provide an unique next token holder, the tie may be broken based on some other property, for example by selecting the neighbor with the lowest MAC address.

With respect to Fig. 1, it is assumed that node 11 is initially holding a token - as indicated by the circle around the node 11 - in *token_interval* (1). Additionally, none of the other nodes 12-17 in the network 10 has had a token yet. The exemplary path that is taken by the single existing token is listed in the table below:

| **Token Interval** | **Token Holder** | **Comment** |
|---|---|---|
| 1 | A | A is assumed as initial holder of token |
| 2 | B | B,C,D,E all have not had a token yet: A selects B due to the MAC address |
| 3 | G | A just had the token; C, D, and G all have not had the token yet; G is the only neighbor of B that is not a neighbor of A --> G gets the token |
| 4 | F | F is not a neighbor of B |
| 5 | E | E is not a neighbor of G |
| 6 | A | A has not had the token longer than F |
| 7 | C | C, D have both not had the token yet; neither is a neighbor of E; C has lower MAC address |
| 8 | B | B waiting longer than A |
| 9 | D | D has not had token yet |
| 10 | G | G has been waiting longer than A or F |

In this manner, the single existing token travels through the network. Since multiple tokens may be circulating through the network simultaneously, several tokens may end up in the same area of the network. However, as already mentioned above, such a local accumulation of tokens is not desirable. Therefore, in case of multiple tokens forwarded between nodes of network, the following procedure should be applied in order to separate the existing tokens again.

For the purpose of illustrations, Fig. 2 shows a network 20 comprising nodes 21-27 within a neighborhood. As indicated by the circles around the nodes 21 and 25, it is assumed that each of these nodes 21 and 25 is holding a token within the same token interval.

In general, when node 21 holding a token finds that one node 22 of its neighbors is also holding a token in the same token interval, node 21 will select the next receiver of its token only among those of its neighbors that are not also neighbors of node 22. Node 22 will behave similarly, selecting a node that is not a neighbor of node 21 as the next receiver of its token. Thus, the two tokens effectively repel each other and will again become separated in the network 20. This helps to achieve the goal of distributing the tokens uniformly in the network 20, avoiding local accumulations of tokens.

With respect to the exemplary embodiment of Fig. 2 for forwarding multiple tokens and as already mentioned above, both nodes 21 and 25 are holding a token within the same token interval, respectively in *token_interval (n).* Node 21 knows from the Hello messages received from node 25 that node 25 also has a token, and vice versa. Furthermore, node 21 will only consider nodes 23 and 24 as receivers of its token, since these nodes are neighbors of node 25, or node 25 itself. In an analogous manner, node 25 will only consider node 26 as receiver of its token. Thus, node 25 will pass its token to node 26 and node 21 will pass its token to node 25 in *token_interval (n+1)* .

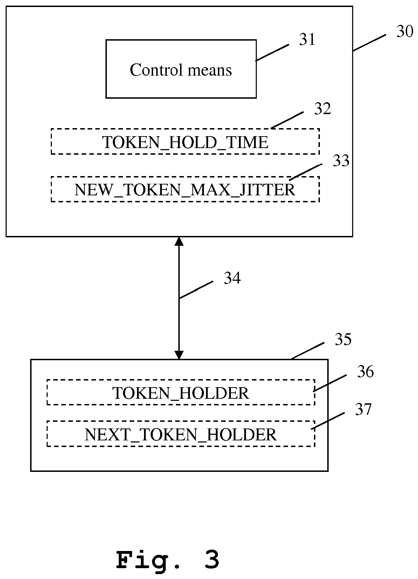

Fig. 3 shows an exemplary interaction 34 between a node 30 and a token 35. The node 30 comprises control means 31, and control parameters such as TOKEN_HOLD_TIME 32 and NEW_TOKEN_MAX_JITTER 33. As already mentioned above, the token 35, respectively the Hello message, comprises two additional fields: TOKEN_HOLDER 36 and NEXT_TOKEN_HOLDER 37.

The above-mentioned control parameter NEW_TOKEN_MAX_JITTER 33 is especially utilized in the context of creating new tokens.

Generally, if a node discovers that none of its neighbors is currently holding a token, it will create a new token for itself and begin to signal this in its transmitted Hello messages. This can happen at any time, not just at the boundaries between token intervals.

In particular, to prevent too many tokens from being created, a node must wait until is has not received a Hello message with an active TOKEN_HOLDER flag 36 for at least TOKEN_HOLD_TIME 32, and then set a timer with a random jitter value between 0 and NEW_TOKEN_MAX_JITTER 33. When the timer expires and still no Hello message with a token has been received, the node shall create a new token. If a token is detected in a Hello message received from another node before the timer expires, the node cancels its timer and does not create a new token.

In addition to this, it should be mentioned that the value that is selected for NEW_TOKEN_MAX_JITTER 33 influences the average number of tokens active in the network at any time. If a larger value is chosen, the number of tokens will decrease, and vice versa.

Moreover, according to a preferred embodiment of the invention, new tokens cannot only be created but it is also possible to delete already existing tokens in the following two ways, each of which is illustrated with the aid of the respective figure.

In the first case, at least two tokens are merged into a single token, if a node receives the at least two tokens from at least two different neighboring nodes. This case may occur, if the at least two neighboring nodes which were previously holding the at least two token are not neighbors of each other.

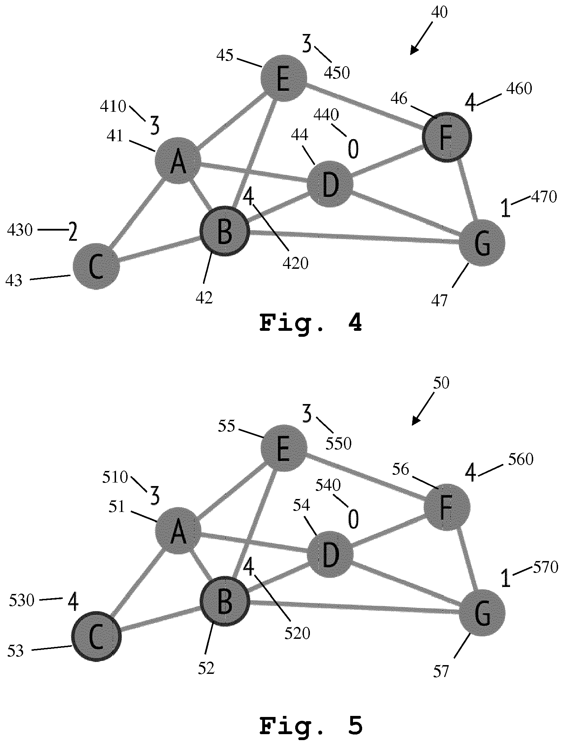

Fig. 4 is intended to illustrate the above-mentioned first case and depicts a network 40 comprising nodes 41-47 within a neighborhood. Additionally, the numbers 410-470 above the nodes 41-47 indicate the last token interval, in which the respective node has held a token. For example, according to Fig. 4, node 41 has held a token in *token_interval (3)* because the number 410 above the node 41 is 3.

With respect to Fig. 4, it is assumed that nodes 42 and 46 of the network 40 are holding a token within the same token interval as indicated by the circles around both nodes 42 and 46. In this example according to Fig. 4, nodes 42 and 46 would both select node 44 as the receiver of their token. Therefore, only one token will be left in the network 40 for the next token interval.

Furthermore, in the second case, at least one existing token is deleted by discarding it, if a first node discovers that one of its neighbors (a second node) is also holding a token, it will try to pass its own token to a node that is not a neighbor of the second node. However, it is possible that the first node does not have such a neighboring node. In this second case, it will not pass its token on, and the token will be lost. Instead of setting the NEXT_TOKEN_HOLDER field 37 to a valid MAC address of one of its neighbors, the first node will set the field to an invalid value, and the token will not be picked up by any neighboring node.

The above-mentioned second case of deletion of existing tokens is illustrated with the aid of Fig. 5 that shows a network 50 comprising nodes 51-57 within a neighborhood. Analogous to Fig. 4, the numbers 510-570 above the nodes 51-57 indicate the last token interval, in which the respective node has held a token. In Fig. 5, as indicated by the circles around the nodes 52 and 53, both nodes 52 and 53 are holding a token within the same token interval. It can be seen that node 53 does not have any neighbors that are not also neighbors of node 52. Therefore, node 53 does not forward its token, and the token is lost. Nevertheless, node 52 will forward its token to node 54.

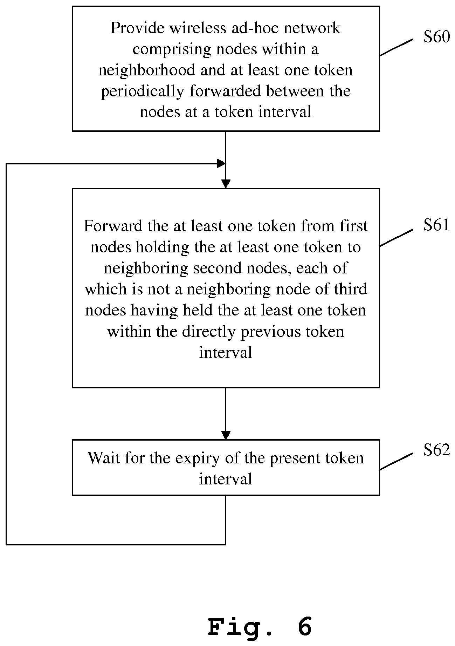

Finally, Fig. 6 shows a flow chart of the inventive method. In a first step S60, a wireless ad-hoc network comprising nodes within a neighborhood and at least one token periodically forwarded between the nodes at a token interval are provided. In a second step S61, the at least one token is forwarded form first nodes holding the at least token to neighboring second nodes, each of which is not a neighboring node of third nodes having held the at least one token within the directly previous token interval. After having waited for the expiry of the present token interval in a third step S62, the at least one token is forwarded again and again according to the steps S61 and S62.

While various embodiments of the present invention have been described above, it should be understood that they have been presented by way of example only, and not limitation. Numerous changes to the disclosed embodiments can be made in accordance with the disclosure herein without departing from scope of the invention as defined in the appended claims.

## Claims

1. A network (10, 20, 40, 50) comprising nodes (11-17, 21-27, 30, 41-47, 51-57) within a neighborhood,
wherein at least one token (35) is forwarded between the nodes (11-17, 21-27, 30, 41-47, 51-57) of the network (10, 20, 40, 50),
wherein each node (11-17, 21-27, 30, 41-47, 51-57) has control means (31), and the control means (31) are configured in a manner that the at least one token (35) is forwarded periodically at a token interval,
**characterized in that**
the control means (31) are configured in a manner that, at each token interval, the at least one token (35) is forwarded from first nodes holding the at least one token (35) within a present token interval to neighboring second nodes, each of which is not a neighboring node of neighboring third nodes having held the at least one token (35) within a previous token interval directly preceding the present token interval,
wherein while the respective node (11-17, 21-27, 30, 41-47, 51-57) is holding the at least one token (35), this node (11-17, 21-27, 30, 41-47, 51-57) is selected to perform distributed tasks.

2. The network according to claim 1,
**characterized in that**
the control means (31) are configured in a manner that the nodes (11-17, 21-27, 30, 41-47, 51-57) of the network (10, 20, 40, 50) are synchronized in time.

3. The network according to claim 1 or 2,
**characterized in that**
the control means (31) are configured in a manner that the at least one token (35) is forwarded to a neighboring node having not had a token (35) for the longest time.

4. The network according to any of the claims 1 to 3,
**characterized in that**
the control means (31) are configured in a manner that the at least one token (35) is forwarded to a neighboring node having the lowest address, especially lowest MAC address.

5. The network according to any of the claims 1 to 4,
**characterized in that**
the control means (31) are configured in a manner that a new token (35) is created by a node (11-17, 21-27, 30, 41-47, 51-57) of the network (10, 20, 40, 50), if the neighboring nodes of the node (11-17, 21-27, 30, 41-47, 51-57) are not currently holding a token (35) and/or a predefined time (33) is expired.

6. The network according to any of the claims 1 to 5,
**characterized in that**
the control means (31) are configured in a manner that at least one existing token (35) is deleted by merging at least two token (35) into a single token (35), if a node (11-17, 21-27, 30, 41-47, 51-57) of the network (10, 20, 40, 50) receives at least two token (35) from at least two different neighboring nodes.

7. The network according to any of the claims 1 to 6,
**characterized in that**
the control means (31) are configured in a manner that at least one existing token (35) is deleted by discarding the at least one existing token (35), if there are no second nodes for receiving the at least one existing token (35) available.

8. A method for forwarding at least one token (35) through a network (10, 20, 40, 50) of nodes (11-17, 21-27, 30, 41-47, 51-57) within a neighborhood,
the at least one token (35) is forwarded periodically at a token interval,
**characterized in that**
at each token interval, the at least one token (35) is forwarded from first nodes holding the at least one token (35) within a present token interval to neighboring second nodes, each of which is not a neighboring node of neighboring third nodes having held the at least one token (35) within a previous token interval directly preceding the present token interval,
wherein while the respective node (11-17, 21-27, 30, 41-47, 51-57) is holding the at least one token (35), this node (11-17, 21-27, 30, 41-47, 51-57) is selected to perform distributed tasks.

9. The method according to claim 8,
**characterized in that**
the nodes (11-17, 21-27, 30, 41-47, 51-57) of the network (10, 20, 40, 50) are synchronized in time.

10. The method according to claim 8 or 9,
**characterized in that**
the at least one token (35) is forwarded to a neighboring node having not had a token (35) for the longest time.

11. The method according to any of the claims 8 to 10,
**characterized in that**
the at least one token (35) is forwarded to a neighboring node having the lowest address, especially lowest MAC address.

12. The method according to any of the claims 8 to 11,
**characterized in that**
a new token (35) is created by a node (11-17, 21-27, 30, 41-47, 51-57) of the network (10, 20, 40, 50), if the neighboring nodes of the node (11-17, 21-27, 30, 41-47, 51-57) are not currently holding a token (35) and/or a predefined time (33) is expired.

13. The method according to any of the claims 8 to 12,
**characterized in that**
at least one existing token (35) is deleted by merging at least two token (35) into a single token (35), if a node (11-17, 21-27, 30, 41-47, 51-57) of the network (10, 20, 40, 50) receives the at least two token (35) from at least two different neighboring nodes.

14. The method according to any of the claims 8 to 13,
**characterized in that**
at least one existing token (35) is deleted by discarding the at least one existing token (35), if there are no second nodes for receiving the at least one existing token (35) available.

15. A computer program with program code means for performing all steps according to any of the claims 8 to 14, if the program is executed on a computer or a digital signal processor of the nodes (11-17, 21-27, 30, 41-47, 51-57).

## Patentansprüche

1. Netzwerk (10, 20, 40, 50) mit Knoten (11-17, 21-27, 30, 41-47, 51-57) innerhalb einer Nachbarschaft,
wobei zumindest ein Token (35) zwischen den Knoten (11-17, 21-27, 30, 41-47, 51-57) des Netzwerks (10, 20, 40, 50) weitergeleitet wird,
wobei jeder Knoten (11-17, 21-27, 30, 41-47, 51-57) Steuermittel (31) aufweist und die Steuermittel (31) derart konfiguriert sind, dass der zumindest eine Token (35) periodisch in einem Token-Intervall weitergeleitet wird,
**dadurch gekennzeichnet, dass**
die Steuermittel (31) derart konfiguriert sind, dass bei jedem Token-Intervall der zumindest eine Token (35) von ersten Knoten, die den zumindest einen Token (35) innerhalb eines gegenwärtigen Token-Intervalls halten, weitergeleitet wird zu benachbarten zweiten Knoten, von denen jeder kein Nachbarknoten von benachbarten dritten Knoten ist, die den zumindest einen Token (35) in einem vorherigen Token-Intervall, das direkt dem gegenwärtigen Token-Intervall vorausging, gehalten haben,
wobei, während der jeweilige Knoten (11-17, 21-27, 30, 41-47, 51-57) den mindestens einen Token (35) hält, dieser Knoten (11-17, 21-27, 30, 41-47, 51-57) ausgewählt wird, um verteilte Aufgaben auszuführen.

2. Netzwerk nach Anspruch 1,
**dadurch gekennzeichnet, dass**
die Steuermittel (31) derart konfiguriert sind, dass die Knoten (11-17, 21-27, 30, 41-47, 51-57) des Netzwerks (10, 20, 40, 50) zeitlich synchronisiert sind.

3. Netzwerk nach Anspruch 1 oder 2,
**dadurch gekennzeichnet, dass**
die Steuermittel (31) derart konfiguriert sind, dass der zumindest eine Token (35) zu einem Nachbarknoten weitergeleitet wird, der die längste Zeit keinen Token (35) hatte.

4. Netzwerk nach einem der Ansprüche 1 bis 3,
**dadurch gekennzeichnet, dass**
die Steuermittel (31) derart konfiguriert sind, dass der zumindest eine Token (35) zu einem Nachbarknoten weitergeleitet wird, der die niedrigste Adresse, insbesondere die niedrigste MAC-Adresse, aufweist.

5. Netzwerk nach einem der Ansprüche 1 bis 4,
**dadurch gekennzeichnet, dass**
die Steuermittel (31) derart konfiguriert sind, dass ein neuer Token (35) von einem Knoten (11-17, 21-27, 30, 41-47, 51-57) des Netzwerks (10, 20, 40, 50) erzeugt wird, wenn die Nachbarknoten des Knotens (11-17, 21-27, 30, 41-47, 51-57) zurzeit keinen Token (35) halten und/oder eine vorgegebene Zeit (33) abgelaufen ist.

6. Netzwerk nach einem der Ansprüche 1 bis 5,
**dadurch gekennzeichnet, dass**
die Steuermittel (31) derart konfiguriert sind, dass zumindest ein vorhandener Token (35) durch die Zusammenführung von mindestens zwei Token (35) in einen einzigen Token (35) gelöscht wird, wenn ein Knoten (11-17, 21-27, 30, 41-47, 51-57) des Netzwerks (10, 20, 40, 50) mindestens zwei Token (35) von mindestens zwei verschiedenen Nachbarknoten empfängt.

7. Netzwerk nach einem der Ansprüche 1 bis 6,
**dadurch gekennzeichnet, dass**
die Steuermittel (31) derart konfiguriert sind, dass zumindest ein vorhandener Token (35) gelöscht wird, indem der zumindest eine vorhandene Token (35) verworfen wird, wenn keine zweiten Knoten zum Empfangen des mindestens einen vorhandenen Tokens (35) verfügbar sind.

8. Verfahren zum Weiterleiten zumindest eines Tokens (35) durch einen Netzwerk (10, 20, 40, 50) von Knoten (11-17, 21-27, 30, 41-47, 51-57) innerhalb einer Nachbarschaft,
wobei der zumindest eine Token (35) periodisch in einem Token-Intervall weitergeleitet wird,
**dadurch gekennzeichnet, dass**
bei jedem Token-Intervall der zumindest eine Token (35) von ersten Knoten, die den zumindest einen Token (35) innerhalb eines gegenwärtigen Token-Intervalls halten, weitergeleitet wird zu benachbarten zweiten Knoten, von denen jeder kein Nachbarknoten von benachbarten dritten Knoten ist, die den zumindest einen Token (35) in einem vorherigen Token-Intervall, das direkt dem gegenwärtigen Token-Intervall vorausging, gehalten haben,
wobei, während der jeweilige Knoten (11-17, 21-27, 30, 41-47, 51-57) den mindestens einen Token (35) hält, dieser Knoten (11-17, 21-27, 30, 41-47, 51-57) ausgewählt wird, um verteilte Aufgaben auszuführen.

9. Verfahren nach Anspruch 8,
**dadurch gekennzeichnet, dass**
die Knoten (11-17, 21-27, 30, 41-47, 51-57) des Netzwerks (10, 20, 40, 50) zeitlich synchronisiert sind.

10. Verfahren nach Anspruch 8 oder 9,
**dadurch gekennzeichnet, dass**
der zumindest eine Token (35) zu einem Nachbarknoten weitergeleitet wird, der die längste Zeit keinen Token (35) hatte.

11. Verfahren einem der Ansprüche 8 bis 10,
**dadurch gekennzeichnet, dass**
der zumindest eine Token (35) zu einem Nachbarknoten weitergeleitet wird, der die niedrigste Adresse, insbesondere die niedrigste MAC-Adresse, aufweist.

12. Verfahren einem der Ansprüche 8 bis 11,
**dadurch gekennzeichnet, dass**
ein neuer Token (35) von einem Knoten (11-17, 21-27, 30, 41-47, 51-57) des Netzwerks (10, 20, 40, 50) erzeugt wird, wenn die Nachbarknoten des Knotens (11-17, 21-27, 30, 41-47, 51-57) zurzeit keinen Token (35) halten und/oder eine vorgegebene Zeit (33) abgelaufen ist.

13. Verfahren einem der Ansprüche 8 bis 12,
**dadurch gekennzeichnet, dass**
zumindest ein vorhandener Token (35) durch die Zusammenführung von mindestens zwei Token (35) in einen einzigen Token (35) gelöscht wird, wenn ein Knoten (11-17, 21-27, 30, 41-47, 51-57) des Netzwerks (10, 20, 40, 50) die mindestens zwei Token (35) von mindestens zwei verschiedenen Nachbarknoten empfängt.

14. Verfahren einem der Ansprüche 8 bis 13,
**dadurch gekennzeichnet, dass**
zumindest ein vorhandener Token (35) gelöscht wird, indem der zumindest eine vorhandene Token (35) verworfen wird, wenn keine zweiten Knoten zum Empfangen des mindestens einen vorhandenen Tokens (35) verfügbar sind.

15. Computerprogramm mit Programmcodemitteln zum Durchführen aller Schritte nach einem der Ansprüche 8 bis 14, wenn das Programm auf einem Computer oder einem digitalen Signalprozessor der Knoten (11-17, 21-27, 30, 41-47, 51-57) ausgeführt wird.

## Revendications

1. Réseau (10, 20, 40, 50) comprenant des nœuds (11-17, 21-27, 30, 41-47, 51-57) dans un voisinage,
dans lequel au moins un jeton (35) est transféré entre les nœuds (11-17, 21-27, 30, 41-47, 51-57) du réseau (10, 20, 40, 50),
dans lequel chaque nœud (11-17, 21-27, 30, 41-47, 51-57) a des moyens de commande (31), et les moyens de commande (31) sont configurés de manière que l'au moins un jeton (35) soit transféré périodiquement à un intervalle de jeton,
**caractérisé en ce que**
les moyens de commande (31) sont configurés de manière que, à chaque intervalle de jeton, l'au moins un jeton (35) soit transféré de premiers nœuds contenant l'au moins un jeton (35) dans un intervalle de jeton présent à des deuxièmes nœuds voisins, dont chacun n'est pas un nœud voisin de troisièmes nœuds ayant contenu l'au moins un jeton (35) dans un intervalle de jeton précédent précédant directement l'intervalle de jeton présent,
dans lequel alors que le nœud respectif (11-17, 21-27, 30, 41-47, 51-57) contient l'au moins un jeton (35), ce nœud (11-17, 21-27, 30, 41-47, 51-57) est sélectionné pour effectuer des tâches réparties.

2. Réseau selon la revendication 1,
**caractérisé en ce que**
les moyens de commande (31) sont configurés de manière que les nœuds (11-17, 21-27, 30, 41-47, 51-57) du réseau (10, 20, 40, 50) soient synchronisés dans le temps.

3. Réseau selon la revendication 1 ou 2,
**caractérisé en ce que**
les moyens de commande (31) sont configurés de manière que l'au moins un jeton (35) soit transféré à un nœud voisin n'ayant pas eu de jeton (35) depuis le plus longtemps.

4. Réseau selon l'une quelconque des revendications 1 à 3,
**caractérisé en ce que**
les moyens de commande (31) sont configurés de manière que l'au moins un jeton (35) soit transféré à un nœud voisin ayant l'adresse la plus basse, en particulier une adresse MAC la plus basse.

5. Réseau selon l'une quelconque des revendications 1 à 4,
**caractérisé en ce que**
les moyens de commande (31) sont configurés de manière qu'un nouveau jeton (35) soit créé par un nœud (11-17, 21-27, 30, 41-47, 51-57) du réseau (10, 20, 40, 50), si les nœuds voisins du nœud (11-17, 21-27, 30, 41-47, 51-57) ne contiennent pas actuellement un jeton (35) et/ou qu'un temps prédéfini (33) est expiré.

6. Réseau selon l'une quelconque des revendications 1 à 5,
**caractérisé en ce que**
les moyens de commande (31) sont configurés de manière qu'au moins un jeton existant (35) soit supprimé en fusionnant au moins deux jetons (35) en un seul jeton (35), si un nœud (11-17, 21-27, 30, 41-47, 51-57) du réseau (10, 20, 40, 50) reçoit au moins deux jetons (35) en provenance d'au moins deux nœuds voisins différents.

7. Réseau selon l'une quelconque des revendications 1 à 6,
**caractérisé en ce que**
les moyens de commande (31) sont configurés de manière qu'au moins un jeton existant (35) soit supprimé en rejetant l'au moins un jeton existant (35), s'il n'y a pas de deuxièmes nœuds pour recevoir l'au moins un jeton existant (35) disponibles.

8. Procédé pour transférer au moins un jeton (35) par l'intermédiaire d'un réseau (10, 20, 40, 50) de nœuds (11-17, 21-27, 30, 41-47, 51-57) dans un voisinage,
l'au moins un jeton (35) est transféré périodiquement à un intervalle de jeton,
**caractérisé en ce que**
à chaque intervalle de jeton, l'au moins un jeton (35) est transféré de premiers nœuds contenant l'au moins un jeton (35) dans un intervalle de jeton présent à des deuxièmes nœuds voisins, dont chacun n'est pas un nœud voisin de troisièmes nœuds ayant contenu l'au moins un jeton (35) dans un intervalle de jeton précédent précédant directement l'intervalle de jeton présent,
dans lequel alors que le nœud respectif (11-17, 21-27, 30, 41-47, 51-57) contient l'au moins un jeton (35), ce nœud (11-17, 21-27, 30, 41-47, 51-57) est sélectionné pour effectuer des tâches réparties.

9. Procédé selon la revendication 8,
**caractérisé en ce que**
les nœuds (11-17, 21-27, 30, 41-47, 51-57) du réseau (10, 20, 40, 50) sont synchronisés dans le temps.

10. Procédé selon la revendication 8 ou 9,
**caractérisé en ce que**
l'au moins un jeton (35) est transféré à un nœud voisin n'ayant pas eu de jeton (35) depuis le plus longtemps.

11. Procédé selon l'une quelconque des revendications 8 à 10,
**caractérisé en ce que**
l'au moins un jeton (35) est transféré à un nœud voisin ayant l'adresse la plus basse, en particulier une adresse MAC la plus basse.

12. Procédé selon l'une quelconque des revendications 8 à 11,
**caractérisé en ce que**
un nouveau jeton (35) est créé par un nœud (11-17, 21-27, 30, 41-47, 51-57) du réseau (10, 20, 40, 50), si les nœuds voisins du nœud (11-17, 21-27, 30, 41-47, 51-57) ne contiennent pas actuellement un jeton (35) et/ou qu'un temps prédéfini (33) est expiré.

13. Procédé selon l'une quelconque des revendications 8 à 12,
**caractérisé en ce que**
au moins un jeton existant (35) est supprimé en fusionnant au moins deux jetons (35) en un seul jeton (35), si un nœud (11-17, 21-27, 30, 41-47, 51-57) du réseau (10, 20, 40, 50) reçoit les au moins deux jetons (35) en provenance d'au moins deux nœuds voisins différents.

14. Procédé selon l'une quelconque des revendications 8 à 13,
**caractérisé en ce que**
au moins un jeton existant (35) est supprimé en rejetant l'au moins un jeton existant (35), s'il n'y a pas de deuxièmes nœuds pour recevoir l'au moins un jeton existant (35) disponibles.

15. Programme informatique avec des moyens de code de programme pour effectuer toutes les étapes selon l'une quelconque des revendications 8 à 14, si le programme est exécuté sur un ordinateur ou un processeur de signal numérique des nœuds (11-17, 21-27, 30, 41-47, 51-57).
